Europäisches Patentamt

(19) European Patent Office

Office européen des brevets

(11) Publication number: **0 108 054**
**B1**

(12) **EUROPEAN PATENT SPECIFICATION**

(45) Date of publication of patent specification: **08.07.87**

(21) Application number: **82901894.4**

(22) Date of filing: **10.05.82**

(86) International application number:
**PCT/US82/00609**

(87) International publication number:
**WO 83/04018 24.11.83 Gazette 83/27**

(51) Int. Cl.⁴: **C 04 B 24/16, C 04 B 22/08**

(54) **ADMIXTURE FOR COLD-WEATHER CONCRETE.**

(43) Date of publication of application:
**16.05.84 Bulletin 84/20**

(45) Publication of the grant of the patent:
**08.07.87 Bulletin 87/28**

(84) Designated Contracting States:
**AT BE CH DE FR GB LI LU NL SE**

(56) References cited:
**GB-A-1 541 803**
**US-A-4 036 659**
**US-A-4 054 461**
**US-A-4 088 504**
**US-A-4 238 236**

(73) Proprietor: **SANDOZ LIMITED**
**Lichtstrasse 35**
**CH-4002 Basel (CH)**

(72) Inventor: **NAKAKURO, Eiji**
**14 Yakuohji-cho**
**Shinjuku-ku Tokyo 106 (JP)**
Inventor: **GOSHOKUBO, Kunio**
**203-5, Ohmagari Samkawa-cho**
**Koza-gun Kanagawa 253-01 (JP)**
Inventor: **ASANO, Kenichi**
**9-10 Sakuradai Midori-ku**
**Yokohama-shi Kanagawa 227 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical field

This invention is concerned with the use, at a temperature between −15°C and below 0°C, of a hydraulic cement mix including hydraulic cement, aggregate, sufficient water to effect hydraulic setting of the cement and up to 10% by weight (based on the weight of the cement) of an admixture which possesses the superior characteristic that early strength gain of concrete at low temperatures is substantially increased without adverse effects on the basic performance of concrete.

In cold-weather concreting, where concrete is placed in cold weather when outside air temperature is at 0°C or under, it is prescribed for curing to be provided by heating or insulating in order that the concrete placed will not be subjected to frost damage during the initial curing period until the concrete placed attains a compressive strength (generally said to be 30 to 50 kg/cm$^2$ (2,96—4,90 MPa) sufficient to secure resistance against frost damage. However, it is not an easy matter from the standpoint of work loads and facilities to provide curing by insulation or heating at the jobsite where concrete has been placed.

### Background art

Meanwhile, it has been proposed that the above-mentioned curing by insulation or heating during the initial curing period be eliminated or reduced through the use of an admixture with a marked effect in producing early strength gain of concrete at low temperature. Such an admixture is called an antifreezing admixture and calcium chloride is representative of the type. However, the antifreezing admixtures presently available are such that at the levels of addition at which effects as antifreezing admixtures can be demonstrated the additions have various undesirable effects on concrete. One is that the basic performance of concrete is greatly lowered. There are also antifreezing admixtures which cause abnormal setting of concrete rapidly impairing consistency after mixing to markedly lower workability. By basic performance of concrete it is meant here the performance which will be the basis for performance evaluation and design of concrete which should be inherent to concrete. In tangible terms it is the performance represented by compressive strength at 28 days of standard curing. Further, the effects of antifreezing admixtures as antifreezing admixtures are under question and there are few cases of actual use.

Since such an antifreezing admixture greatly lowers the basic performances of concrete, there are countries (for example, Japan) which prohibit large-scale use of antifreezing admixtures.

As mentioned above, there are various problems about placing cold-weather concrete, and except for special projects, it is normal at present for concrete placement work to be discontinued in the cold season. This constitutes an obstruction to year-round construction which has been the long-cherished desire of the construction industry, and poses great problems with regard to the economics and construction period of the entire project.

From US Patents 4036659 and 4054461 cement compositions are known, containing portland cement, calcium sulfate hemihydrate, urea or an alkali metal nitrate, one or more retarders and as optional ingredients calcium chloride and/or a condensation product of mononaphthalene sulfonic acid and formaldehyde.

From US Patent 4088504 a method for producing high strength cement conglomerates is known by adding to a mix of water, binder and aggregates an admixture containing a polymer obtained by polycondensation of an aldehyde with a water-soluble sulphonic acid of the aromatic series and a product of the hydrolysis of starch. Water soluble inorganic electrolytes may advantageously be added. From US Patent 4238236 formulations for more rapid setting and hardening in cold weather are known, including a water-soluble dispersant/water-reducing agent, an inorganic basic agent and a water-soluble salt of an inorganic oxyacid.

From British Patent Specification No. 1541.903 a cement-set accelerating composition is known, comprising alkali-metal nitrate and a water-soluble sulphonated aromatic hydrocarbon/aliphatic aldehyde condensate or an alkali-metal salt thereof.

### Disclosure of the invention

This invention has the effect of prominently improving initial strength of concrete at low temperature without harming basic performance, and comprises an admixture for cold-weather concrete which does not induce abnormal setting even when added in large quantity, which has been perfected upon numerous studies with the purposes of dissolving the various problems of cold-weather concrete and facilitating year-round performance of concreting work, and which it is possible to use at temperatures as low as −10°C to −15°C.

The admixture for cold-weather concrete used according to the present invention is of the following composition:

(i) One part by weight of a single compound or a mixture of two or more compounds selected from a group consisting of water-soluble salts of sulfonated melamine formalin condensates (hereinafter abbreviated as SMF) and water-soluble salts of aromatic hydrocarbon sulfonate formalin condensates (hereinafter abbreviated as ARF), (hereinafter Component No. 1), and

(ii) Three to ten parts by weight of a single compound or a mixture of two or more compounds selected from a group consisting of nitrates, nitrites (both water-soluble salts) and urea (Component No. 2).

A water-soluble salt of a sulfonated melamine formalin condensate (SMF) mentioned above is a compound of a structure where melamine, of which amino group is partially sulfomethylated, is condensed with formalin, and is a water-soluble powder of molecular weight of approximately 1000 to 5000. This compound is described in Australian Patent No. 263607.

As for water-soluble salts of aromatic hydrocarbon sulfonate formalin condensates (ARF), they are the water-soluble salts of formalin condensates of sulfonated polycyclic aromatic hydrocarbon such as naphthalene and anthracene, and these aromatic hydrocarbons may be compounds with alkyl groups substituted, or an industrial product which is a mixture of various aromatic hydrocarbons (for example, creosote oil).

These SMF and ARF are known as water-reducing admixtures for concrete, while materials comprising the second component of this invention are known as antifreezing admixtures for concrete. SMF and ARF have the effects of reducing unit water contents required to produce prescribed concrete slumps, and concretes to which these are added will have their strengths increased in accordance with reductions in unit water contents. However, the water-reducing effects of SMF and ARF tend to be reduced at low temperatures, and with the addition of only a SMF or ARF, there is no noticeable effect of increased early strength. The effect of addition of only the second component of this invention is that of greatly impairing the basic performance of concrete similarly to conventional antifreezing admixtures, and the early strength-increasing effect is not necessarily great. However, when Component No. 1 and Component No. 2 are added together, synergistic effects which were wholly unexpected are seen in that the early strength gain effect at low temperature is markedly improved, while the basic performance of the concrete is completely unimpaired. Such a synergistic effect is especially prominent when the ratio between Component No. 1 and Component No. 2 is in the range of 1:3—10. It is noted that there are many concrete water-reducing admixtures other than SMF and ARF which are known. Examples are lignosulfonates and hydroxy carboxylates. However, even though such concrete water-reducing admixtures and Component No. 2 are used together, such a prominent synergistic effect as seen with this invention cannot be recognized.

The addition quantity of the admixture for cold-weather concrete used according to this invention is suitable in the range of approximately 1 to 10% as expressed in terms of percentages by weight based on cement (dosage), and the early strength gain effect is greater the higher the dosage. Dosages considered as suitable will differ depending on the environmental temperature of concrete placed, but to indicate general measures, they are approximately 1% at below 0 to −2°C, approximately 2 to 3% at around −5°C, and approximately 7 to 10% at around −15°C. In general, when dosage is high it is desirable for a composition with a high ratio of Component No. 2 to be selected. Further, it is desirable for dosage and composition to be adjusted so that the dosage of Component No. 1 will be not less than 0.2%.

The admixture for cold-weather concrete used according to this invention is added to concrete by introducing into the mixer when mixing concrete. Introduction into the mixer may be accomplished in various forms: in unmodified powder form, as an aqueous solution, or dissolved in mixing water. Also, Component No. 1 and Component No. 2 may be charged separately into the mixer.

With concrete to which the admixture for cold-weather concrete used according to this invention has been added it will suffice to perform simple curing to the extent of keeping it covered with a tarpaulin after concrete placement, and it is unnecessary for special curing such as with ordinary cold-weather concrete. During this curing period there will be no adverse effects on the physical properties and strength gain of concrete after freezing even if freezing of concrete occurs during this curing period.

Through the use of the admixture for cold-weather concrete used according to this invention, it will become possible to perform cold-weather concreting at temperatures as low as −10°C (−15°C in cases) without curing by thermal insulation or by heating. Cold-weather concreting has been made easy by this and it has become possible for concrete placement to be performed throughout the year, something which had been long-sought by the construction industry.

Examples of implementation of this invention are shown below, but this invention is not limited in any way to these examples.

Example 1
The effects in cases of using Component No. 1 and Component No. 2 individually are shown in this example, along with the effects of conventional antifreezing admixtures.

(1) Concrete materials used
Cement: Onoda Type 1 portland cement (C)
Fine aggregate: Kinu River sand, specific gravity=2.62, FM=2.78 (S)
Coarse aggregate: crushed sandstone, MS=20 mm (G).

3

(2) Admixtures

SMF: "Melment®" concrete water-reducing admixture manufactured by Showa Denko Co., Ltd.

Sodium salt of formalin condensate of naphthalene sulfonate (abbreviated NSF): Kao Soap Co., Ltd., concrete water-reducing admixture, "Mighty"

Calcium chloride, ethylene glycol, urea, sodium nitrate, sodium nitrite: reagent extra pure.

(3) Mix proportions of concrete

Water-cement ratio of 0.50 and sand-aggregate ratio of s/a=43% were maintained constant and the mix proportions were determined for target values of slump of 15 cm and air content of 4.5 plus or minus 0.5%.

(4) Mixing, curing and testing of concrete

Mixing of concrete was performed in a room of approximately 5°C using a 4-cubic foot tilting mixer. Concrete was cast in molds for cylinder specimens of 10-centimeter diameter by 20-centimeter height and cured for the specified length of time at the specified curing temperature while kept in the molds (wrapped in vinyl bags). Specimens finished curing were left standing in a room of 20°C for approximately 3 hours for thawing before performing compressive strength tests. Curing temperatures were of the three levels of 20°C, −5°C and −10°C.

(5) The test results are shown in Table 1.

TABLE 1

| Test number | Admixture | | Mix proportion of concrete | | | | Compressive strength (kg/cm²) (1 kg/cm²=0,0981 MPa) | | | | | |
| | Additive | Dosage (%) | C (kg/m³) | W (kg/m³) | Slump (cm) | Air (%) | −5°C | | −10°C | | 20°C | |
| | | | | | | | 7 days | 28 days | 7 days | 28 days | 7 days | 28 days |
|---|---|---|---|---|---|---|---|---|---|---|---|---|
| 1 | Plain | 0 | 368 | 184 | 15.0 | 4.2 | 0 | 0 | 0 | 0 | 261 | 384 |
| 2 | Calcium chloride | 5.0 | 368 | 184 | 9.5 | 4.7 | 43 | 92 | 22 | 56 | 218 | 282 |
| 3 | Ethylene glycol | 5.0 | 368 | 184 | 8.0 | 4.0 | 20 | 28 | 6 | 14 | 203 | 345 |
| 4 | Urea | 5.0 | 368 | 184 | 16.0 | 5.0 | 28 | 57 | 18 | 37 | 229 | 338 |
| 5 | Sodium nitrate | 2.5 | 368 | 184 | 15.0 | 4.5 | 40 | 104 | 22 | 61 | 246 | 319 |
| 6 | Sodium nitrate | 5.0 | 368 | 184 | 16.5 | 5.0 | 57 | 139 | 38 | 91 | 194 | 256 |
| 7 | Sodium nitrite | 2.5 | 368 | 184 | 16.0 | 4.6 | 46 | 112 | 28 | 87 | 262 | 296 |
| 8 | Sodium nitrite | 5.0 | 368 | 184 | 16.5 | 4.7 | 64 | 143 | 42 | 108 | 205 | 303 |
| 9 | SMF | 0.25 | 358 | 179 | 15.5 | 4.0 | 12 | 41 | 10 | 21 | 270 | 392 |
| 10 | SMF | 0.50 | 344 | 172 | 15.0 | 4.2 | 24 | 58 | 14 | 30 | 291 | 409 |
| 11 | NSF | 0.25 | 350 | 175 | 14.5 | 4.3 | 4 | 9 | 0 | 4 | 285 | 391 |
| 12 | NSF | 0.5 | 336 | 168 | 15.5 | 4.0 | 6 | 12 | 3 | 7 | 297 | 406 |

**0 108 054**

As is clearly shown by the above table, the addition of a conventional antifreezing admixture (calcium chloride, ethylene glycol) greatly impairs the basic performance of concrete. (Comparison of strength for 20°C, 28 days with the value for the mix proportion not using an admixture). The same may be said for Component No. 2 of this invention. Further, conventional antifreezing admixtures cause abnormal setting to pose a serious problem in using them. Component No. 1 of this invention used alone has practically no early strength gain effect at low temperature.

Best mode for carrying out invention
Example 2
This example shows the effect of admixtures for cold-weather concrete of this invention consisting of mixtures of Component No. 1 and Component No. 2.

The materials and testing methods used in testing were all identical to those in Example 1.

The proportions by weight of the components of the admixtures, and the identification symbols of the admixtures are given in Table 2 and the test results in Table 3.

TABLE 2

| Formulation / Component | A | B | C | D | E | F |
|---|---|---|---|---|---|---|
| Sodium nitrate | 9 | | | | 4.5 | |
| Sodium nitrite | | 9 | 8 | | 4.5 | 9 |
| Urea | | | | 9 | | |
| SMF | 1 | 1 | 2 | 1 | 1 | |
| NSF | | | | | | 1 |

6

TABLE 3

| Test number | Admixture | | Mix proportion of concrete | | | | Compressive strength (kg/cm²) (1 kg/cm²=0,0981 MPa) | | | | | |
|---|---|---|---|---|---|---|---|---|---|---|---|---|
| | | | | | | | −5°C | | −10°C | | 20°C | |
| | Formulation | Dosage (%) | C (kg/m³) | W (kg/m³) | Slump (cm) | Air (%) | 7 days | 28 days | 7 days | 28 days | 7 days | 28 days |
| 13 | A | 2.5 | 352 | 176 | 14.5 | 4.5 | 97 | 209 | 53 | 106 | 271 | 408 |
| 14 | A | 5.0 | 336 | 168 | 15.0 | 4.8 | 181 | 272 | 107 | 174 | 268 | 413 |
| 15 | B | 2.5 | 352 | 176 | 15.0 | 4.4 | 112 | 217 | 66 | 119 | 259 | 407 |
| 16 | B | 5.0 | 336 | 168 | 14.0 | 5.0 | 186 | 283 | 114 | 181 | 277 | 425 |
| 17 | C | 2.5 | 340 | 170 | 14.5 | 4.3 | 129 | 236 | 72 | 130 | 282 | 412 |
| 18 | C | 5.0 | 312 | 156 | 15.0 | 4.0 | 195 | 298 | 118 | 194 | 304 | 437 |
| 19 | D | 5.0 | 336 | 168 | 15.0 | 5.0 | 75 | 132 | 52 | 87 | 291 | 427 |
| 20 | E | 2.5 | 352 | 176 | 14.5 | 4.2 | 117 | 209 | 63 | 125 | 266 | 398 |
| 21 | E | 5.0 | 336 | 168 | 15.5 | 4.5 | 184 | 290 | 117 | 183 | 275 | 423 |
| 22 | F | 2.5 | 348 | 174 | 15.0 | 4.4 | 107 | 204 | 61 | 112 | 262 | 405 |
| 23 | F | 5.0 | 324 | 162 | 15.0 | 4.1 | 171 | 268 | 106 | 169 | 282 | 430 |

0 108 054

**0 108 054**

As is clearly seen in Table 3, the admixture for cold-weather concrete of this invention has an early strength gain effect at low temperature which is markedly greater than for the case of Component No. 2 above, while moreover, the basic performance of concrete is not merely unimpaired, but rather, a remarkable effect of improvement is indicated.

Example 3

This example is of tests varying the mix proportions of concrete and the composition of the admixture.

(1) Mix proportions and materials of concrete

TABLE 4

| W/C (%) | s/a (%) | C (kg/m³) | W (kg/m³) | S (kg/m³) | G (kg/m³) | Admx. dosage |
|---|---|---|---|---|---|---|
| 47.1 | 47 | 350 | 165 | 837 | 955 | 5% |

Except for fine aggregate consisting of sand from the Oi River the materials used for concrete were all identical to those used in the tests of Example 1.

(2) The admixture compositions were those given in Table 5.

TABLE 5

| Component / Formulation | G | H | I | J | K |
|---|---|---|---|---|---|
| Sodium nitrate | | 4 | 2.4 | 8 | |
| Sodium nitrite | 8 | 4 | 5.6 | | 6 |
| Urea | | | | | |
| SMF | 2 | 2 | 2 | 2 | |
| NSF | | | | | 1 |

The test results are shown in Table 6.

TABLE 6

| Test number | Admixture Formulation | Dosage (%) | Slump (cm) | Air (%) | Compressive strength (kg/cm²) (1 kg/cm²=0,0981 MPa) −10°C 7 days | −10°C 28 days | 20°C 7 days | 20°C 28 days |
|---|---|---|---|---|---|---|---|---|
| 24 | G | 5 | 16.0 | 3.7 | 78.6 | 154 | 388 | 480 |
| 25 | H | 5 | 18.0 | 3.7 | 120 | 222 | 375 | 475 |
| 26 | I | 5 | 16.5 | 3.9 | 110 | 222 | 378 | 480 |
| 27 | J | 5 | 17.0 | 3.8 | 74.4 | 144 | 389 | 491 |
| 28 | K | 5 | 18.5 | 4.2 | 76.3 | 151 | 394 | 492 |

It may be seen in this example, similarly to the case of Example 2, that the admixture for cold-weather concrete of this invention produces excellent effects.

Industrial applicability

This invention may be utilized wherever it is desired to prepare concrete in cold temperatures.

8

## Claims

1. The use, at a temperature between −15°C and below 0°C, of a hydraulic cement mix including hydraulic cement, aggregate, sufficient water to effect hydraulic setting of the cement and up to 10% by weight (based on the weight of the cement) of an admixture comprising:

i) one part by weight of one or more compounds selected from water soluble salts of sulphonated melamin formalin condensates and water soluble salts of aromatic hydrocarbon sulphonate formalin condensates, and

ii) 3—10 parts by weight of one or more compounds selected from water soluble nitrates, nitrites and urea.

2. The use according to claim 1 wherein the admixture is present in an amount of between 1 and 10% by weight based upon the weight of the cement.

3. The use according to claims 1 and 2 wherein the dosage of component No (i) is not less than 0,2% by weight based upon the weight of the cement.

4. The use according to claim 1 wherein component No (i) is selected from the water soluble salts of sulphonated melamin formalin condensates.

5. The use according to claim 1 wherein component No (ii) is selected from water soluble nitrites.

## Patentansprüche

1. Verwendung bei einer Temperatur zwischen −15°C und 0°C einer hydraulischen Zementmischung, enthaltend hydraulischen Zement, Aggregat, genügend Wasser, um den hydraulischen Zement auszuhärten und bis zu 10 Gewichtsprozent (begozen auf das Gewicht des Zementes) eines Zusatzmittels enthaltend:

1) ein Gewichtsteil einer oder mehrerer Verbindungen aus der Gruppe der wasserlöslichen Salze von Kondensaten eines sulfonierten Melamins mit Formaldehyd und wasserlöslichen Salzen von Kondensaten aus sulfonierten aromatischen Kohlenwasserstoffen und Formaldehyd und

2) 3 bis 10 Gewichtsteilen einer oder mehrerer Verbindungen aus der Gruppe der wasserlöslichen Nitrate, Nitrite oder Harnstoff.

2. Verwendung gemäss Anspruch 1, dadurch gekennzeichnet, dass die Menge des Zusatzmittels zwischen 1 und 10 Gewichtsprozent, bezogen auf das Gewicht des Zementes, beträgt.

3. Verwendung gemäss Ansprüchen 1 und 2, dadurch gekennzeichnet, dass der Anteil der Komponente (1) nicht kleiner als 0,2 Gewichtsprozent, bezogen auf die Menge des Zementes, beträgt.

4. Verwendung gemäss Anspruch 1 dadurch gekennzeichnet, dass die Komponente (1) ein wasserlösliches Salz eines sulfonierten Melamin-Formaldehyd-Kondensats ist.

5. Vewendung gemäss Anspruch 1, dadurch gekennzeichnet, dass die Komponente (2) ein wasserlösliches Nitrit ist.

## Revendications

1. L'utilisation, à une température comprise entre −15°C et en-dessous de 0°C, d'une gâchée de ciment hydraulique comprenant du ciment hydraulique, un agrégat, suffisamment d'eau pour provoquer la prise du ciment et jusqu'à 10% en poids (par rapport au poids du ciment) d'un mélange comprenant:

i) une partie en poids d'un ou de plusieurs composés choisis parmi les sels solubles dans l'eau de produits de condensation de formaldéhyde et de mélamine sulfonée et les sels solubles dans l'eau de produits de condensation de formaldéhyde et de sulfonate d'hydrocarbure aromatique, et

ii) 3—10 parties en poids d'un ou de plusieurs composés choisis parmi les nitrates solubles dans l'eau, les nitrites solubles dans l'eau et l'urée.

2. L'utilisation selon la revendication 1, caractérisée en ce que le mélange est présent en une quantité comprise entre 1 et 10% en poids par rapport au poids du ciment.

3. L'utilisation selon la revendication 1 et 2, caractérisée en ce que le dosage en composant No. i) n'est pas inférieur à 0,2% en poids par rapport au poids du ciment.

4. L'utilisation selon la revendication 1, caractérisée en ce que le composant No. i) est choisi parmi les sels solubles dans l'eau de produits de condensation de formaldéhyde et de mélamine sulfonée.

5. L'utilisation selon la revendication 1, caractérisée en ce que le composant No. ii) est choisi parmi les nitrites solubles dans l'eau.